# EUROPEAN PATENT APPLICATION

(11) **EP 4 492 068 A1**
(43) Date of publication of application: **15.01.2025**
(21) Application number: 23767160.7
(22) Date of filing: 08.03.2023
(51) Int. Cl.: G01N 35/10, G01N 35/00

(54) **TEST CARTRIDGE AND SPECIMEN TESTING DEVICE COMPRISING SAME**

(30) Priority: 08.03.2022 KR 20220029389
(71) Applicant: Ugenecell Inc., Seoul 05557 (KR); Boditech Med Inc., Chuncheon-si, Gangwon-do 24398 (KR)
(72) Inventor: WON, Byoung Yeon, Seoul 06995 (KR); RYU, Seung Hwan, Chuncheon-si Gangwon-do 24377 (KR); IM, Youn Tae, Chuncheon-si Gangwon-do 24401 (KR); CHOI, Kwang Won, Chuncheon-si Gangwon-do 24209 (KR); KIM, Byeong Chul, Chuncheon-si Gangwon-do 24303 (KR)
(74) Representative: Eisenführ Speiser
(86) International application number: PCT/KR2023/003160
(87) International publication number: WO 2023/172059

(57) **Abstract**

A test cartridge according to an embodiment of the present invention comprises: a reagent reaction part in which a plurality of chambers accommodating test reagents are arranged; a lysis solution distribution part which is connected to a vial container accommodating a lysis solution, receives the lysis solution, and distributes the lysis solution to the respective chambers; and a container seating part which has a container insertion space into which the vial container is inserted, surrounds the lysis solution distribution part, and is seated on the reagent reaction part.

## Description

### [Technical Field]

The present invention relates to a test cartridge and a specimen testing device including the same, and more particularly, to a test cartridge capable of distributing a lysis solution stored in a vial container to each chamber in which a test reagent is accommodated, and a specimen testing device including the same.

### [Background Art]

Generally, with the development of medicine and various related technologies, substances such as blood cells, nucleic acids, proteins, and antigens included in predetermined biological samples such as blood are being tested. After the samples described above are collected, changes that occur after reacting the collected samples with predetermined reagents are analyzed and observed, and thus the presence or absence, the proportion, and the amount of various substances included in the samples may be tested. Accordingly, information on the presence or absence of a disease, the condition of the disease, or the like may be obtained.

In this sample testing process, a state in which the samples and reagents used to test the sample are not affected by external factors and a state in which the correct amount is used each time are very important to obtain reproducible and accurate results. In the testing process, since the samples and the reagents may be exposed to the outside, it is necessary to effectively prevent contamination caused by the exposure of the samples and the reagents and ensure accuracy of the test using a correct amount.

Further, after the reaction of the reagents and the samples, tests for detecting and reading/analyzing reaction products are accurately and quickly performed under one integrated system. Thus, it is necessary to reduce a testing time and testing costs and it is also necessary to reduce operations included and costs consumed throughout the test.

### [Disclosure]

### [Technical Problem]

The present invention is directed to providing a test cartridge capable of preventing shaking of a vial container and allowing a lysis solution to evenly flow to chambers in which test reagents are accommodated, when the lysis solution stored in the vial container flows to the chambers, and a specimen testing device including the same.

The present invention is also directed to providing a test cartridge capable of preventing shaking of a vial container and allowing a lysis solution to evenly flow to chambers, in which test reagents are accommodated, when the lysis solution stored in the vial container flows to the chambers, and a specimen testing device including the same.

The present invention is also directed to providing a test cartridge capable of supplying a lysis solution from a vial container to respective chambers without separate power as air passages through which only air passes to the respective chambers are formed and a specimen testing device including the same.

### [Technical Solution]

A test cartridge according to an embodiment of the present invention includes a reagent reaction unit in which a plurality of chambers accommodating test reagents are arranged, a lysis solution distributing unit that is connected to a vial container in which a lysis solution is accommodated, receives the lysis solution, and distributes the lysis solution to the respective chambers, and a container mounting part that has a container insertion space into which the vial container is inserted, surrounds the lysis solution distributing unit, and is mounted on the reagent reaction unit.

Further, the lysis solution distributing unit may include a distribution plate provided with an inlet hole vertically passing therethrough, an inlet vertically protruding upward from the distribution plate coaxially with the inlet hole, having an upper end portion having a sharp tip portion, and inserted into the vial container, a channel portion that has a reference channel connected to the inlet hole on a lower surface of the distribution plate and a plurality of branch channels branching off from the reference channel into several branches and guides flow of the lysis solution flowing into the inlet hole, a plurality of guide pins vertically protruding form distal ends of the respective branch channels to a lower portion of the distribution plate, and a plurality of air holes vertically passing through the distribution plate.

Further, the lysis solution distributing unit may be coupled to the reagent reaction unit so that the guide pins are inserted into the chambers, respectively, and the air holes are connected to the chambers, respectively.

Further, the guide pin may be provided with a pin groove on one surface thereof connected to the branch channel in a longitudinal direction of the guide pin.

Further, the air holes may be provided on sides opposite to surfaces, on which the pin groove is provided, to be spaced apart from the distal ends of the branch channels with the guide pins interposed therebetween, respectively.

Further, the plurality of branch channels may branch off from the reference channel to be left-right symmetric to the inlet hole.

Further, the test cartridge may further include a gasket member that is disposed between the lysis solution distributing unit and the reagent reaction unit and covers the respective chambers. The gasket member may be provided with a plurality of pinholes through which the guide pins pass, respectively, and a plurality of gasket air holes corresponding to the air holes, respectively.

Further, the distribution plate may have a plurality of air grooves respectively connected to the air holes in a direction in which the plurality of air holes are arranged, and the air grooves may have a diameter greater than a diameter of the air holes.

Further, the test cartridge may further include a filter member provided with a plurality of filter protrusions being inserted into the air grooves and covering the air holes.

Further, the distribution plate may be provided with a plurality of upper fitting protrusions protruding from an edge of an upper surface thereof to an upper portion of the distribution plate and a plurality of lower fitting protrusions protruding from an edge of a lower surface thereof to a lower portion of the distribution plate. Further, the distribution plate may be disposed between the reagent reaction unit and the container mounting part and fitted in the reagent reaction unit and the container mounting part.

Further, the inlet may have an inlet passage provided coaxially with a center of the inlet hole and an inlet guide groove that guides flow of the lysis solution to the inlet passage.

Further, the reagent reaction unit may further include a plurality of light source input portions protruding to sides of the chambers, respectively.

Further, the reagent reaction unit may have a plurality of side fitting grooves, and the container mounting part may have a plurality of fastening protrusions fitted in the plurality of side fitting grooves.

Further, the container mounting part may further include a hook provided in the container insertion space and bound to the vial container.

Further, according to the embodiment of the present invention, a specimen testing device including the test cartridge may be provided.

### [Advantageous Effects]

In the present invention, when a lysis solution stored in a vial container flows to chambers in which test reagents are accommodated, the lysis solution can be evenly distributed to the chambers and guided to the chambers.

In the present invention, when a lysis solution stored in a vial container flows to chambers in which test reagents are accommodated, shaking of the vial container can be prevented, and the lysis solution can evenly flow to the chambers.

In the present invention, an air passage through which only air passes to chambers can be formed in a test cartridge, a lysis solution can flow in the direction of gravity, and thus the lysis solution can be provided from a vial container to the chambers without power.

### [Description of Drawings]

FIG. 1 is a schematic state diagram in which a test cartridge is installed in a specimen testing device according to an embodiment of the present invention.
FIG. 2 is a schematic perspective view illustrating the test cartridge according to the embodiment of the present invention.
FIG. 3 is a schematic cross-sectional view illustrating the test cartridge according to the embodiment of the present invention.
FIG. 4 is a schematic exploded perspective view illustrating the test cartridge according to the embodiment of the present invention.
FIG. 5 is a schematic view illustrating a coupling state of a heating unit, a reagent reaction unit, a gasket member, and a lysis solution distributing unit when viewed from the front side in a state in which a container mounting part is removed from the test cartridge according to the embodiment of the present invention.
FIG. 6 is a schematic view illustrating a coupling state of the reagent reaction unit, the gasket member, and the lysis solution distributing unit when viewed from the rear side in the embodiment of the present invention.
FIG. 7 is a schematic rear view illustrating the reagent reaction unit according to the embodiment of the present invention.
FIGS. 8 and 9 are schematic views illustrating a structure of the lysis solution distributing unit according to the embodiment of the present invention.
FIGS. 9 to 13 are views for describing a process of providing a lysis solution to each chamber in the embodiment of the present invention.

### [Modes of the Invention]

The present invention may be modified in various changes and may have various embodiments, and thus specific embodiments will be illustrated and described in the accompanying drawings.

However, it should be understood that the present invention is not limited to the specific embodiments and includes all changes, equivalents, and substitutions included in the spirit and scope of the present invention. In description of the present invention, when it is determined that the detailed description of widely known related technologies may make the subject matter of the present invention unclear, the detailed description will be omitted.

Terms such as first and second may be used to describe various components, but the components should not be limited by the terms. The terms are used only for the purpose of distinguishing one component from another component.

Terms used in the present invention are used only to describe specific embodiments and are not intended to limit the present invention. Singular expressions include plural expressions unless clearly otherwise indicated in the context.

It should be understood in the present invention that terms such as "include" and "have" are intended to indicate the presence of features, numbers, steps, operations, components, parts, or combinations thereof described in the specification and do not exclude in advance the possibility of the presence or addition of one or more other features, numbers, steps, operations, components, parts, or combinations thereof.

Thus, since a configuration illustrated in embodiments described herein is merely one of most preferred embodiments of the present invention and does not represent the entire technical spirit of the present invention, there may be various equivalents and modifications that may replace the embodiments at a time of the present invention.

Further, it should be understood that, in the present invention, the accompanying drawings are illustrated in an enlarged manner or a reduced manner for convenience of description.

Hereinafter, a test cartridge and a specimen testing device including the same according to the present invention will be described in detail with reference to the accompanying drawings.

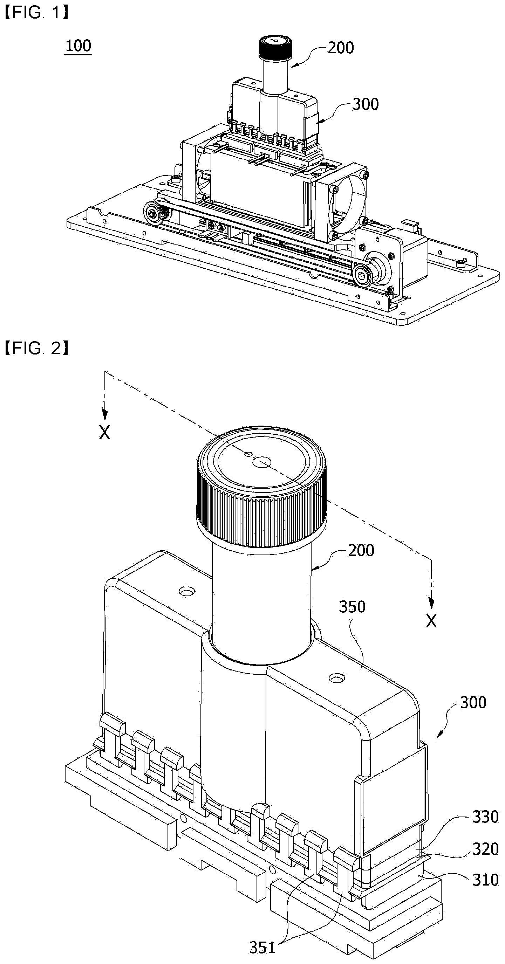

As illustrated in FIG. 1, a specimen testing device 100 according to an embodiment of the present invention includes a vial container 200 and a test cartridge 300. The specimen testing device 100 is a device that tests reaction of a specimen according to different types of test reagents.

The vial container 200 is coupled to the test cartridge 300. A lysis solution mixed with a specimen is stored in the vial container 200. The lysis solution is a solution for bursting cells, viruses, or the like to extract nucleic acids.

The test cartridge 300 related to the embodiment of the present invention includes a reagent reaction unit 310 in which a plurality of chambers accommodating test reagents 10 are arranged, a lysis solution distributing unit 330 that is connected to the vial container 200 in which the lysis solution is accommodated, receives the lysis solution, and distributes the lysis solution to the respective chambers, and a container mounting part 350 that has a container insertion space into which the vial container 200 is inserted, surrounds the lysis solution distributing unit 330, and is mounted on the reagent reaction unit 310.

The test cartridge 300 includes the reagent reaction unit 310, a gasket member 320, the lysis solution distributing unit 330, a filter member 340, and the container mounting part 350. The reagent reaction unit 310, the gasket member 320, the lysis solution distributing unit 330, the filter member 340, and the container mounting part 350 may be sequentially stacked vertically.

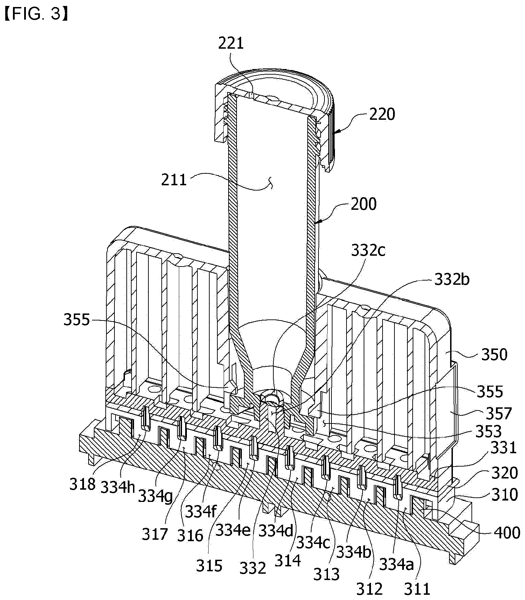

Referring to FIGS. 2 to 4, the vial container 200 is inserted into the test cartridge 300. Here, the vial container 200 is a container in which the lysis solution mixed with the specimen is accommodated.

When the vial container 200 inserted into the container mounting part 350 is punched by an inlet 332 of the lysis solution distributing unit 330, the lysis solution flows downward from the vial container 200 through the inlet 332 to a channel portion 333 of the lysis solution distributing unit 330 in the direction of gravity. Thereafter, the lysis solution flows downward along respective guide pins 334a to 334h provided in the channel portion 333 to respective chambers 311 to 318 and is stored in the respective chambers 311 to 318.

The reagent reaction unit 310 includes the plurality of chambers 311 to 318. A plurality of chambers 311 to 318 are spaced apart from each other in a row. Here, different test reagents 10 are accommodated in the respective chambers 311 to 318. The chamber is a space in which reaction of the specimen with respect to the test reagent 10 is performed.

The reagent reaction unit 310 is provided with a plurality of upper fitting grooves 319a at an upper edge thereof, and a plurality of upper fitting protrusions of a distribution plate 331 are fitted in the plurality of upper fitting grooves 319a.

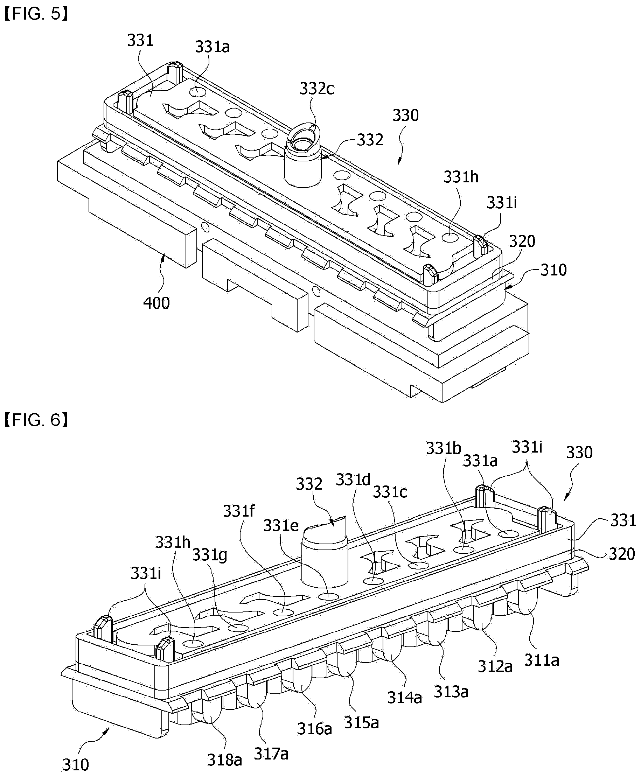

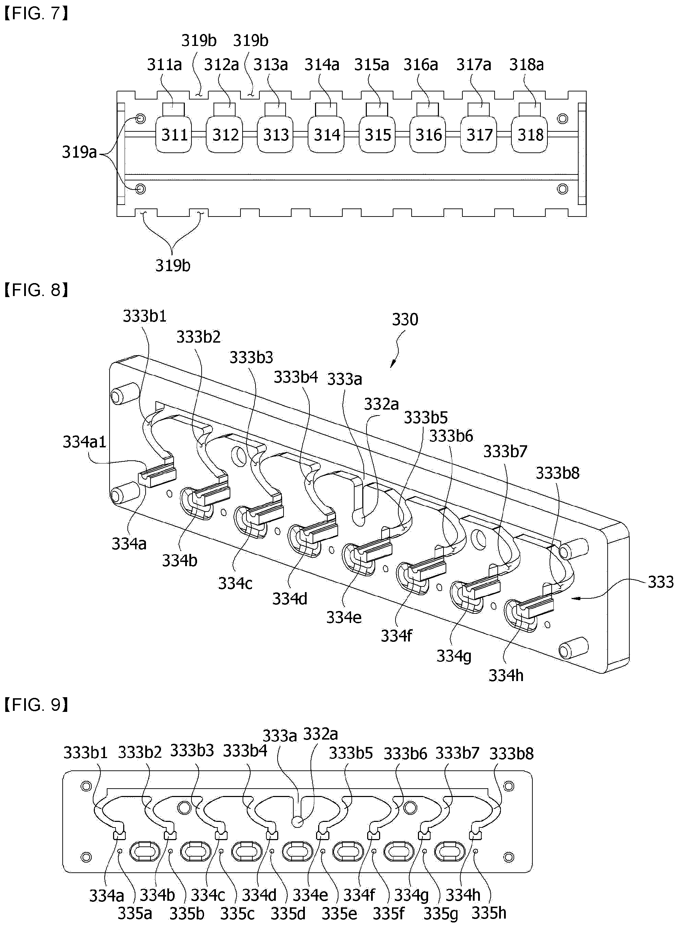

Referring to FIGS. 6 and 7, the reagent reaction unit 310 is provided with a plurality of side fitting grooves 319b spaced apart from each other in a longitudinal direction on both sides thereof, and the plurality of side fitting grooves 319b are provided to be offset from the arrangement of the plurality of chambers 311 to 318. Here, the side fitting groove 319b is a groove to which a fitting protrusion 351 of the container mounting part 350 is coupled.

In the present embodiment, for convenience of description, the plurality of chambers 311 to 318 will be individually referred to as a "first chamber 311 to an eighth chamber 318." However, the number of chambers may be changed and is not limited to the specification and the drawing.

The respective chambers 311 to 318 are provided with light source input portions 311a to 318a that laterally protrude.

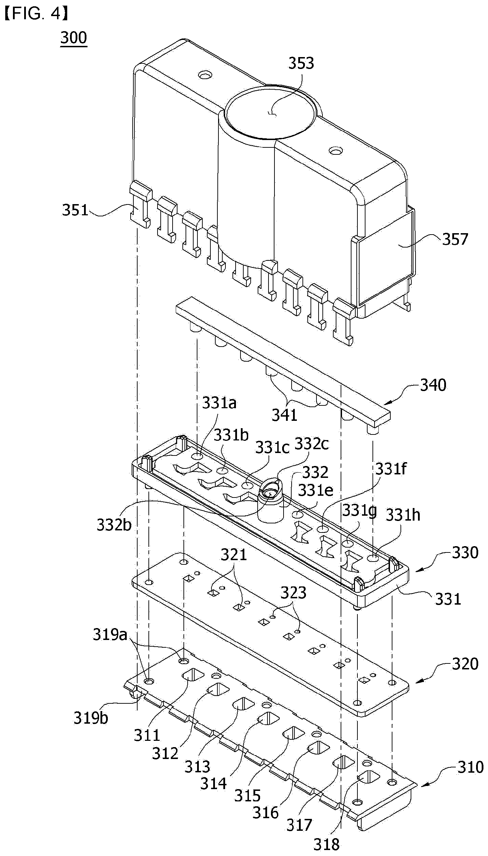

Referring to FIGS. 4 and 5, the gasket member 320, the lysis solution distributing unit 330, and the filter member 340 may be sequentially stacked and arranged between the reagent reaction unit 310 and the container mounting part 350.

The gasket member 320 is disposed on the reagent reaction unit 310 to cover the respective chambers 311 to 318. In this case, the gasket member 320 may be installed in the reagent reaction unit 310 so as not to limit flow of the lysis solution to the respective chambers 311 to 318. To this end, the gasket member 320 is provided with a plurality of pinholes 321 and a plurality of gasket air holes 323 in an arrangement direction of the plurality of chambers 311 to 318.

Here, the plurality of pinholes 321 are holes through which the guide pins 334a to 334h pass, respectively. The pinholes 321 have a larger cross-sectional area than that of the guide pins 334a to 334h.

The gasket air hole 323 is a hole through which air passes. The plurality of gasket air holes 323 are provided to correspond to air holes 335a to 335h, respectively. The plurality of gasket air holes 323 may be provided with the air holes 335a to 335h in one-to-one correspondence. The gasket air holes 323 are provided to communicate with the chambers 311 to 318, respectively. The gasket air holes 323 are provided coaxially with the air holes 335a to 335h and air grooves 331a to 331h, respectively, to form an air flow path.

Referring to FIGS. 5 to 9, the lysis solution distributing unit 330 includes the distribution plate 331, the inlet 332, the channel portion 333, the plurality of guide pins 334a to 334h, and the plurality of air holes 335a to 335h.

The lysis solution distributing unit 330 includes the distribution plate 331 provided with an inlet hole vertically passing therethrough, the inlet 332 that vertically protrudes upward from the distribution plate 331 coaxially with the inlet hole, has an upper end portion having a sharp tip portion, and is inserted into the vial container 200, the channel portion 333 that has a reference channel connected to the inlet hole on a lower surface of the distribution plate 331 and a plurality of branch channels branching off from the reference channel into several branches, and guides flow of the lysis solution flowing into the inlet hole, the plurality of guide pins 334a to 334h that vertically protrude downward from the distribution plate 331 at distal ends of the branch channels, and the plurality of air holes 335a to 335h vertically passing through the distribution plate 331.

In this case, the lysis solution distributing unit 330 may be coupled to the reagent reaction unit 310 so that the guide pins 334a to 334h are inserted into the chambers 311 to 318, respectively, and the air holes 335a to 335h are connected to the chambers 311 to 318, respectively.

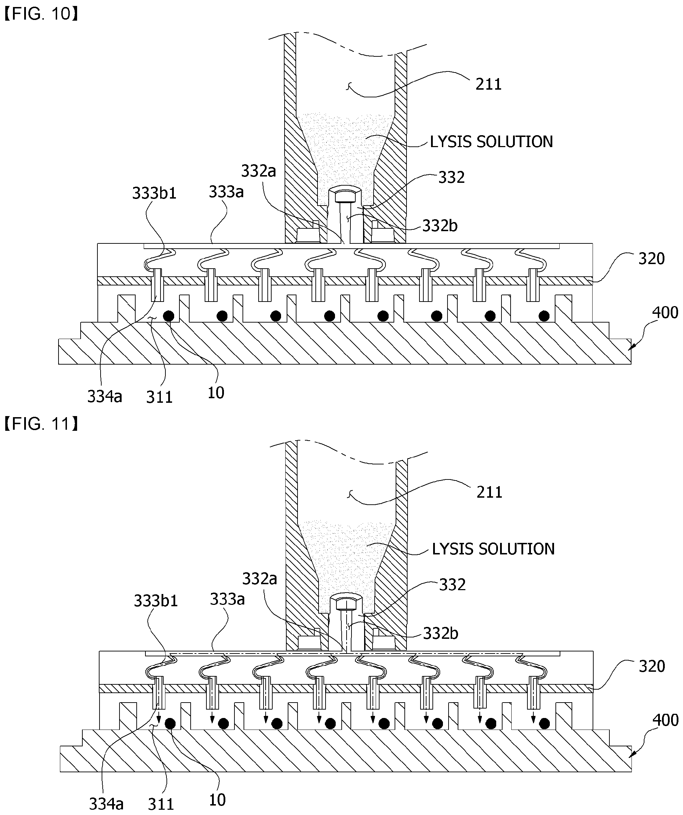

Referring to FIGS. 10 and 11, the lysis solution distributing unit 330 is inserted into the vial container 200 through a lower end portion of the vial container 200, receives the lysis solution, and distributes the lysis solution to the respective chambers 311 to 318. The lysis solution distributing unit 330 is stacked on and coupled to the reagent reaction unit 310 so that the guide pins 334a to 334h are inserted into the chambers 311 to 318, respectively, and the air holes 335a to 335h are connected to the chambers 311 to 318, respectively.

The distribution plate 331 has a specification corresponding to the reagent reaction unit 310. The distribution plate 331 is provided with an inlet hole 332a vertically passing through a center thereof. The inlet 332 is provided in an upper surface of the distribution plate 331, and the channel portion 333 and the plurality of guide pins 334a to 334h are provided on a lower surface thereof.

Referring to FIGS. 5 and 6, the distribution plate 331 is provided with a plurality of upper fitting protrusions 331i protruding from an edge of the upper surface thereof toward an upper side of the distribution plate 331. An upper portion of the distribution plate 331 is fitted into the container mounting part 350 by the upper fitting protrusion 331i.

Referring to FIGS. 8 and 9, the distribution plate 331 is provided with a plurality of lower fitting protrusions (not illustrated) protruding from an edge of the lower surface thereof toward a lower side of the distribution plate 331. A lower portion of the distribution plate 331 is fitted into the reagent reaction unit 310 by the lower fitting protrusion.

Referring to FIGS. 5 and 6, the inlet 332 is provided coaxially with the inlet hole 332a to vertically protrude upward from the distribution plate 331 and is provided to be inserted into the vial container 200.

An upper end portion of the inlet 332 has a sharp tip portion. Further, the inlet 332 has a hollow interior.

The inlet 332 is provided with an inlet passage 332b and an inlet guide groove 332c. The inlet passage 332b vertically passes through the tip portion coaxially with a center of the inlet hole 332a. The inlet passage 332b is a passage through which the lysis solution flows from the vial container 200 to the channel portion 333.

The inlet guide groove 332c is provided at the tip portion of the inlet 332. The inlet guide groove 332c guides the flow of the lysis solution to the inlet passage 332b. That is, due to the inlet guide groove 332c, the lysis solution flows to the inlet passage 332b along the inlet guide groove 332c provided in a narrow width at the tip portion rather than the entire area of the tip portion of the inlet 332.

The channel portion 333 is provided on the lower surface of the distribution plate 331. The channel portion 333 guides the flow of the lysis solution flowing into the inlet hole 332a.

The channel portion 333 includes a reference channel 333a and a plurality of branch channels 333b1 to 333b8. Here, the reference channel 333a has a groove structure connected to the inlet hole 332a on the lower surface of the distribution plate 331. The plurality of branch channels 333b1 to 333b8 have a groove structure that branches off from the reference channel 333a into several branches.

Referring to FIGS. 8 to 11, the plurality of branch channels 333b1 to 333b8 branch off from the reference channel 333a to be left-right symmetric to the inlet hole 332a. The plurality of branch channels 333b1 to 333b8 are provided to be curved with a predetermined curvature in a direction away from the inlet hole 332a. Alternatively, the branch channels 333b1 to 333b8 may have an L-shaped structure that is gently bent in a direction away from the inlet hole 332a.

In the document, the plurality of branch channels 333b1 to 333b8 may be individually referred to as the "first branch channel 333b1 to the eighth branch channel 333b8."

The plurality of guide pins 334a to 334h are provided to protrude vertically from distal ends of the branch channels 333b1 to 333b8 to the lower portion of the distribution plate 331 to correspond to the arrangement of the plurality of chambers 311 to 318. That is, the number of branch channels 333b1 to 333b8, the number of guide pins 334a to 334h, and the number of chambers 311 to 318 may be the same.

The guide pins 334a to 334h are provided with pin grooves 334a-1 in a longitudinal direction of the guide pins 334a to 334h on one surface thereof connected to the branch channels 333b1 to 333b8 and guide the flow of the lysis solution flowing along the branch channels 333b1 to 333b8.

In the present embodiment, for convenience of description, the plurality of guide pins 334a to 334h are individually referred to as the "first guide pin 334a to the eighth guide pin 334h." The first guide pin 334a to the eighth guide pin 334h may have the same structure.

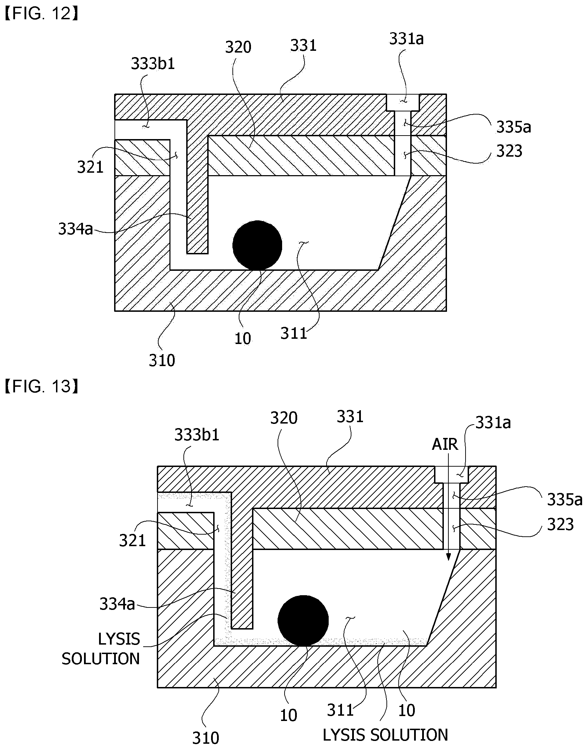

Here, the first guide pin 334a is provided to protrude from a distal end of the first branch channel 333b1 to the lower surface of the distribution plate 331. Referring to FIGS. 12 and 13, the first guide pin 334a is inserted into the first chamber 311 to guide flow of the lysis solution into the first chamber 311. In this case, the lysis solution flows downward into the first chamber 311 along the pin groove 334a-1 provided in the first guide pin 334a.

The second guide pin 334b is provided to protrude from a distal end of the second branch channel 333b2 to the lower surface of the distribution plate 331. The second guide pin 334b is inserted into the second chamber 312 and guides flow of the solution into the second chamber 312.

The third guide pin 334c is provided to protrude from a distal end of the third branch channel 333b3 to the lower surface of the distribution plate 331. The third guide pin 334c is inserted into the third chamber 313 and guides flow of the solution into the third chamber 313.

The fourth guide pin 334d is provided to protrude from a distal end of the fourth branch channel 333b4 to the lower surface of the distribution plate 331. The fourth guide pin 334d is inserted into the fourth chamber 314 and guides flow of the solution into the fourth chamber 314.

The fifth guide pin 334e is provided to protrude from a distal end of the fifth branch channel 333b5 to the lower surface of the distribution plate 331. The fifth guide pin 334e is inserted into the fifth chamber 315 and guides flow of the solution into the fifth chamber 315.

The sixth guide pin 334f is provided to protrude from a distal end of the sixth branch channel 333b6 to the lower surface of the distribution plate 331. The sixth guide pin 334f is inserted into the sixth chamber 316 and guides flow of the solution into the sixth chamber 316.

The seventh guide pin 334g is provided to protrude from a distal end of the seventh branch channel 333b7 to the lower surface of the distribution plate 331. The seventh guide pin 334g is inserted into the seventh chamber 317 and guides flow of the solution into the seventh chamber 317.

The eighth guide pin 334h is provided to protrude from a distal end of the eighth branch channel 333b8 to the lower surface of the distribution plate 331. The eighth guide pin 334h is inserted into the eighth chamber 318 and guides flow of the solution into the eighth chamber 318.

The plurality of air holes 335a to 335h are provided to vertically pass through the distribution plate 331 and to correspond to the arrangement of the guide pins 334a to 334h. That is, the air holes are provided with the guide pins in one-to-one correspondence. The air holes 335a to 335h are provided on sides opposite to surfaces, on which the pin groove 334a-1 is provided, to be spaced apart from the distal ends of the branch channels 333b1 to 333b8 with the guide pins 334a to 334h interposed therebetween.

In the present embodiment, for convenience of description, the plurality of air holes 335a to 335h are individually referred to as the "first air hole 335a to the eighth air hole 335h."

The first air hole 335a to the eighth air hole 335h arranged in a row are parallel to the first guide pin 334a to the eighth guide pin 334h.

The first air hole 335a is positioned on a straight line with respect to the first guide pin 334a. Likewise, the second air hole 335b to the eighth air hole 335h are positioned on straight lines with respect to the second guide pin 334b to the eighth guide pin 334h, respectively.

Here, the first air hole 335a communicates with the first chamber 311 and guides flow of the air into the first chamber 311. The first air hole 335a is disposed on a side opposite to the pin groove 334a-1 to be spaced apart from the first guide pin 334a.

The second air hole 335b communicates with the second chamber 312 and guides flow of the air into the second chamber 312. The third air hole 335c communicates with the third chamber 313 and guides flow of the air into the third chamber 313. The fourth air hole 335d communicates with the fourth chamber 314 and guides flow of the air into the fourth chamber 314.

The fifth air hole 335e communicates with the fifth chamber 315 and guides flow of the air into the fifth chamber 315. The sixth air hole 335f communicates with the sixth chamber 316 and guides flow of the air into the sixth chamber 316.

The seventh air hole 335g communicates with the seventh chamber 317 and guides flow of the air into the seventh chamber 317. The eighth air hole 335h communicates with the eighth chamber 318 and guides flow of the air into the eighth chamber 318.

The distribution plate 331 is provided with the plurality of air grooves 331a to 331h having diameters that are greater than the diameters of the air holes 335a to 335h and provided to correspond to the arrangement of the air holes 335a to 335h.

In the present embodiment, for convenience of description, the plurality of air grooves 331a to 331h are individually referred as the "first air groove 331a to the eighth air groove 331h." Filter protrusions 341 of the filter member 340 are inserted into the first air groove 331a to the eighth air groove 331h, respectively.

The first air hole 335a is provided in the first air groove 331a. The first air hole 335a is an opening that vertically passes through a bottom surface of the first air groove 331a. The first air groove 331a is provided to have a diameter greater than the diameter of the first air hole 335a.

Likewise, the second air hole 335b to the eighth air hole 335h are provided in the second air groove 331b to the eighth air groove 331h, respectively.

The first air hole 335a to the eighth air hole 335h are covered by the filter member 340 inserted into the first air groove 331a to the eighth air groove 331h. The filter member 340 allows air to pass therethrough and performs filtering to prevent other foreign substances from being introduced into the air holes 335a to 335h.

The filter member 340 has the plurality of filter protrusions 341 protruding from one surface thereof. The plurality of filter protrusions 341 are provided to be inserted into the first air groove 331a to the eighth air groove 331h, respectively. The plurality of filter protrusions 341 are inserted into the first air groove 331a to the eighth air groove 331h to cover the air holes 335a to 335h, respectively.

The vial container 200 in which the lysis solution mixed with the specimen is accommodated is inserted into the container mounting part 350. The container mounting part 350 has a container insertion space 353, a plurality of hooks 355, the plurality of fitting protrusions 351, and a cartridge code 357.

The container insertion space 353 is a space into which the vial container 200 is inserted.

Meanwhile, the vial container 200 includes a container body 210 and a container lid 220. The container body 210 includes a solution accommodating portion 211 in which the lysis solution is accommodated and a punching layer that closes a lower portion of the solution accommodating portion 211. The punching layer is a thin film and is provided to pass by the inlet 332 of the test cartridge 300. In this case, when the punching layer is punched by the inlet 332, the lysis solution inside the solution accommodating portion 211 flows to the test cartridge 300.

The container lid 220 is detachably coupled to an upper portion of the container body 210. The container lid 220 is provided with a plurality of lid ventilation holes 221. Air flows into the solution accommodating portion 211 due to the lid ventilation holes 221.

That is, the solution accommodating portion 211 is in an atmospheric pressure due to the lid ventilation holes 221. Accordingly, when the punching layer is punched, the lysis solution flows in the direction of gravity even without a separate driving device.

Further, the plurality of hooks 355 are provided in the container insertion space 353 to protrude inward from the container insertion space 353. The hook 355 is inserted into the vial container 200 and prevents the vial container 200 from being separated from the container insertion space 353.

The cartridge code 375 is a portion in which a code name of the test cartridge 300 on which the test reagent 10 is tested is written.

The plurality of fitting protrusions 351 are protrusions that vertically protrude downward from the container mounting part 350. The plurality of fitting protrusions 351 are fitted into the side fitting grooves 319b of the reagent reaction unit 310. Accordingly, the container mounting part 350 is coupled to the reagent reaction unit 310. The container mounting part 350 and the reagent reaction unit 310 are coupled to be vertically stacked.

When the vial container 200 is inserted into the container insertion space 353, the container mounting part 350 supports a side surface of the vial container 200 while the hook 355 is caught by the vial container 200. The container mounting part 350 stably grips the vial container 200 so that the lysis solution inside the vial container 200 flows in the direction of gravity.

A preferred embodiment of the present invention as described above is merely disclosed for illustrative purposes, those skilled in the art having general knowledge of the present invention may make various modifications, changes, and additions within the spirit and scope of the present invention, and these modifications, changes, and addition belong to the appended claims.

### [Industrial Applicability]

In the present invention, when a lysis solution stored in a vial container flows to chambers in which test reagents are accommodated, the lysis solution may be evenly distributed to the chambers and guided to the chambers.

## Claims

1. A test cartridge comprising:
a reagent reaction unit in which a plurality of chambers accommodating test reagents are arranged;
a lysis solution distributing unit connected to a vial container in which a lysis solution is accommodated, configured to receive the lysis solution, and configured to distribute the lysis solution to the respective chambers; and
a container mounting part having a container insertion space into which the vial container is inserted, configured to surround the lysis solution distributing unit, and mounted on the reagent reaction unit.

2. The test cartridge of claim 1, wherein the lysis solution distributing unit includes:
a distribution plate provided with an inlet hole vertically passing therethrough;
an inlet vertically protruding upward from the distribution plate coaxially with the inlet hole, having an upper end portion having a sharp tip portion, and inserted into the vial container;
a channel portion having a reference channel connected to the inlet hole on a lower surface of the distribution plate and a plurality of branch channels branching off from the reference channel into several branches and configured to guide flow of the lysis solution flowing into the inlet hole;
a plurality of guide pins vertically protruding form distal ends of the respective branch channels to a lower portion of the distribution plate; and
a plurality of air holes vertically passing through the distribution plate.

3. The test cartridge of claim 2, wherein the lysis solution distributing unit is coupled to the reagent reaction unit so that the guide pins are inserted into the chambers, respectively, and the air holes are connected to the chambers, respectively.

4. The test cartridge of claim 2, wherein the guide pin is provided with a pin groove on one surface thereof connected to the branch channel in a longitudinal direction of the guide pin.

5. The test cartridge of claim 4, wherein the air holes are provided on sides opposite to surfaces, on which the pin groove is provided, to be spaced apart from the distal ends of the branch channels with the guide pins interposed therebetween, respectively.

6. The test cartridge of claim 2, wherein the plurality of branch channels branch off from the reference channel to be left-right symmetric to the inlet hole.

7. The test cartridge of claim 2, further comprising a gasket member disposed between the lysis solution distributing unit and the reagent reaction unit and configured to cover the respective chambers,
wherein the gasket member is provided with a plurality of pinholes through which the guide pins pass, respectively, and a plurality of gasket air holes corresponding to the air holes, respectively.

8. The test cartridge of claim 2, wherein the distribution plate has a plurality of air grooves respectively connected to the air holes in a direction in which the plurality of air holes are arranged, and
the air grooves have a diameter greater than a diameter of the air holes.

9. The test cartridge of claim 8, further comprising a filter member provided with a plurality of filter protrusions being inserted into the air grooves and covering the air holes.

10. The test cartridge of claim 2, wherein the distribution plate is provided with a plurality of upper fitting protrusions protruding from an edge of an upper surface thereof to an upper portion of the distribution plate and a plurality of lower fitting protrusions protruding from an edge of a lower surface thereof to a lower portion of the distribution plate, and
the distribution plate is disposed between the reagent reaction unit and the container mounting part and fitted in the reagent reaction unit and the container mounting part.

11. The test cartridge of claim 2, wherein the inlet has an inlet passage provided coaxially with a center of the inlet hole and an inlet guide groove configured to guide flow of the lysis solution to the inlet passage.

12. The test cartridge of claim 1, wherein the reagent reaction unit further includes a plurality of light source input portions protruding to sides of the chambers, respectively.

13. The test cartridge of claim 1, wherein the reagent reaction unit has a plurality of side fitting grooves, and
the container mounting part has a plurality of fastening protrusions fitted in the plurality of side fitting grooves.

14. The test cartridge of claim 1, wherein the container mounting part further includes a hook provided in the container insertion space and bound to the vial container.

15. A specimen testing device comprising the test cartridge of claim 1.
